# FASCICULE DE BREVET EUROPEEN

(11) **EP 3 206 892 B1**
(45) Date de publication et mention de la délivrance du brevet: **03.10.2018**
(21) Numéro de dépôt: 15780880.9
(22) Date de dépôt: 15.10.2015
(51) Int. Cl.: B60C 11/03, B60C 11/24

(54) **DISPOSITIF DE SUIVI DE L'USURE D'UN PNEU**
ÜBERWACHUNGSVORRICHTUNG FÜR REIFENABNUTZUNG
TYRE WEAR MONITORING DEVICE

(30) Priorité: 15.10.2014 FR 1459865
(43) Date de publication de la demande: 23.08.2017
(73) Titulaire: Compagnie Générale des Etablissements Michelin, 63000 Clermont-Ferrand (FR)
(72) Inventeur: QUANTINET, Benjamin, 63040 Clermont-Ferrand Cedex 9 (FR); BARDIN, Damien, 63040 Clermont-Ferrand Cedex 9 (FR); CAMBON, Stéphanie, 63040 Clermont-Ferrand Cedex 9 (FR); LEJEUNE, Jonathan, 63040 Clermont-Ferrand Cedex 9 (FR)
(74) Mandataire: Diernaz, Christian
(86) Numéro de dépôt international: PCT/EP2015/073851
(87) Numéro de publication internationale: WO 2016/059143

(56) Documents cités:
- WO-A1-2011/039194
- DE-A1- 4 426 950
- FR-A1- 2 971 732
- US-A- 2 322 505
- US-A1- 2014 290 813

## Description

### DOMAINE DE L'INVENTION

La présente invention concerne les bandes de roulement de pneu et plus particulièrement un dispositif de suivi du niveau d'usure de telles bandes de roulement.

### ÉTAT DE LA TECHNIQUE

Les pneus poids lourd sont pourvus d'une bande de roulement comportant une sculpture formée d'un ensemble d'éléments en relief délimités par des découpures. Parmi ces découpures, on distingue les rainures destinées notamment à permettre un drainage efficace de l'eau éventuellement présente sur la chaussée par temps de pluie.

Lors du roulage la bande de roulement s'use jusqu'à atteindre une limite d'usure indiquant au conducteur qu'il doit procéder à soit un remplacement de ce pneu par un pneu neuf soit un rechapage, c'est-à-dire à une pose d'une nouvelle bande de roulement sur la même enveloppe. Cette limite d'usure est en règle générale fixée par les législations nationales lesquelles imposent une profondeur minimale de creux pour des raisons de sécurité.

L'usager a besoin d'un indicateur ou témoin d'usure lui indiquant de façon aisée si ses pneus ont ou non atteint cette limite réglementaire d'usure.

Il est d'usage de pourvoir le fond de certaines rainures de reliefs de gomme, ces reliefs ayant une hauteur déterminée par rapport au fond de la rainure pour indiquer de façon précise cette limite d'usure. Ces reliefs (formant des petites plates-formes) sont moulés pendant l'opération de moulage de la bande de roulement du pneu. Dès lors que l'ensemble des rainures s'ouvrent sur la surface de roulement à l'état neuf, ces indicateurs d'usure sont visibles dès le départ. Ceci n'est plus nécessairement le cas aujourd'hui puisqu'il se trouve que des pneus destinés à équiper des véhicules poids lourd ont évolué et adoptent des dessins de sculpture sensiblement différents de ce qui se faisait antérieurement.

Notamment, les bandes de roulement sont pourvues de cavités qui ne sont destinées à s'ouvrir sur la surface de roulement qu'après une usure partielle de la bande de roulement. De cette manière, il est possible de conserver une rigidité plus élevée à une bande de roulement à l'état neuf tout en ayant le juste nécessaire en terme de rainures ou creux ouverts sur la surface de roulement pour servir de capacité de drainage et d'écoulement d'eau éventuellement présente sur la chaussée.

On connaît notamment la demande WO 2010/030276 A1 qui décrit un pneu dont la bande de roulement comprend de telles cavités internes s'ouvrant sur la surface de roulement de la bande de roulement après une usure partielle prédéterminée. On connaît également la demande WO 2011/039194 A1 qui décrit une nouvelle forme de rainure ondulant entre un niveau supérieur et un niveau inférieur (par inférieur il faut entendre plus dans l'épaisseur de la bande de roulement que le niveau supérieur). Ce type de rainure présente des parties pouvant s'ouvrir sur la surface de roulement avant d'autres parties, ces dernières restant cachées pour l'usager jusqu'à leur ouverture sur la surface de roulement après une certaine usure.

On connait par le document FR2971732 un pneu dont la bande de roulement comprend des cavités sous la surface de roulement destinées à former de nouvelles rainures après usure partielle. Ces cavités sont pourvues de nervures continues de largeur inférieure à la largeur des cavités, ces nervures étant destinées à protéger le fond de ces cavités contre d'éventuelles agressions provoquées par des objets externes pouvant rentrer dans ces cavités.

Pour ces types de nouvelles sculptures de bande de roulement, il existe le besoin d'un dispositif permettant de satisfaire aux réglementations imposant la présence d'un moyen de contrôle et de suivi de l'usure d'une bande de roulement, cette bande pouvant comporter des cavités internes destinées à apparaître après une usure partielle de ladite bande de roulement.

### Définitions :

Le taux de creux d'une sculpture est égal au rapport entre la surface des creux (rainures) délimités par les blocs et la surface totale (surface de contact des blocs et surface des creux). Un taux de creux faible indique une grande surface de contact des blocs et une faible surface de creux entre les blocs.

Le taux de creux surfacique d'une sculpture est égal au rapport entre la surface des creux (essentiellement formés par des rainures) délimités par les éléments de relief (blocs, nervures) et la surface totale (surface de contact des éléments de relief et surface des creux). Un taux de creux faible indique une grande surface de contact de la bande de roulement et une faible surface de creux entre les éléments de relief.

Le taux de creux volumique d'une sculpture d'une bande de roulement à l'état neuf est égal au rapport entre le volume des creux (formés notamment par des rainures, des cavités) délimités par les éléments de relief (blocs, nervures) et le volume total de la bande de roulement comprenant le volume de matière à user et le volume des creux. Un taux de creux volumique faible indique un faible volume de creux relativement au volume de la bande de roulement. Pour chaque niveau d'usure, on peut également définir un volume de creux.

Plan médian équatorial : c'est un plan perpendiculaire à l'axe de rotation et passant par les points du pneu radialement les plus éloignés dudit axe.

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une bande de roulement a une épaisseur maximale à l'intérieur de laquelle peuvent être moulées toutes sortes de cavités s'ouvrant à un moment ou à un autre sur la surface de roulement de la bande de roulement. Cette même bande a une épaisseur limite de matière à user en roulage. Cette épaisseur limite de matière à user correspond à une limite au-delà de laquelle il est recommandé de ne plus rouler car les volumes de creux s'ouvrant sur la surface de roulement ont atteint une limite à ne pas dépasser. Il est alors nécessaire de procéder à une opération de recreusage (opération par laquelle on creuse de nouvelles rainures dans l'épaisseur restante) ou à un changement de pneu ou à tout le moins à un rechapage pour poser une nouvelle bande de roulement. Certains règlements nationaux imposent la présence d'indicateurs permettant à l'usager de connaître cette limite d'usure.

Une découpure désigne de manière générique soit une rainure soit une incision et correspond à l'espace délimité par des parois de matière se faisant face et distantes l'une de l'autre d'une distance non nulle (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions usuelles de roulage.

Par cavité interne ou cavité sous la surface de roulement à neuf, on entend dans le présent document un volume de creux formé à l'intérieur d'une bande de roulement à l'état neuf, ce volume de creux étant destiné à s'ouvrir sur la surface de roulement de la bande après une usure partielle prédéterminée pour former une nouvelle rainure et de nouvelles arêtes.

Par creux, on désigne de manière générique soit une rainure soit une cavité interne.

### BREF EXPOSÉ DE L'INVENTION

La présente invention vise à fournir un moyen de contrôle et de suivi de l'usure de bandes de roulement de pneu, ces bandes de roulement comportant des cavités internes à l'état neuf.

À cet effet, l'invention a pour objet une bande de roulement comprenant un dispositif de suivi de l'usure en roulage, cette bande de roulement comprenant au moins une cavité interne destinée à former une rainure ouverte sur la surface de roulement après une usure partielle prédéfinie de la bande.

On définit sur cette bande de roulement une limite d'usure : cette limite d'usure correspond à une épaisseur maximale de matière à user au-delà de laquelle les règlements nationaux imposent de procéder à une opération de recreusage ou à un changement de pneu ou encore à un renouvellement de sa bande de roulement.

On définit sur cette bande de roulement une profondeur maximale des creux : cette profondeur maximale correspond à la profondeur du fond des rainures et/ou cavités internes le plus à l'intérieur de la bande, cette distance étant mesurée à l'état neuf entre la surface de roulement et ledit fond. Cette profondeur maximale est plus grande que la limite d'usure afin de conserver un volume de drainage suffisant (ces deux valeurs étant mesurées par rapport à la surface de roulement de la bande de roulement à l'état neuf).

Il est proposé un dispositif de contrôle et de suivi de l'usure en roulage d'une bande de roulement, cette bande comprenant au moins une cavité s'ouvrant sur la surface de roulement après une usure partielle prédéterminée. Ce dispositif comprend un puits de mesure s'ouvrant en permanence - c'est-à-dire dès l'état neuf - sur la surface de roulement de la bande de roulement, ce puits de mesure ayant un fond formé d'une première partie et d'une deuxième partie décalées l'une par rapport à l'autre dans la profondeur et dans la direction principale de la cavité. Ces deux parties formant le fond sont situées à des distances différentes par rapport à la surface de roulement à l'état neuf et sont décalées l'une par rapport à l'autre dans la direction principale de la cavité. La première partie présente une largeur sensiblement égale à la largeur de la cavité et une surface supérieure plane située à une distance de la surface de roulement égale à la limite d'usure. La deuxième partie occupant la largeur de la cavité est située à une distance égale à la profondeur maximale des cavités internes. La direction principale de la cavité correspond à la direction principale d'un écoulement de liquide dans la cavité en roulage.

Le puits de mesure est dimensionné pour permettre les mesures de la profondeur de la première partie et de la profondeur de la deuxième partie tout en limitant le plus possible l'impact de la présence de ce puits sur la diminution de rigidité de la bande de roulement. La première partie est judicieusement dimensionnée pour n'occuper qu'une très faible longueur de la cavité dans laquelle elle est formée. Préférentiellement la longueur de cette première partie mesurée dans la direction principale de la cavité est au plus 50% de la longueur d'ouverture du puits de mesure sur la surface de roulement à neuf.

Grâce à cette invention, il est possible d'avoir un pneu dont la bande de roulement est pourvue de creux non apparents sur la surface de roulement à l'état neuf et dans le même temps de satisfaire aux règlements imposant la présence d'indicateurs d'usure permettant de contrôler l'usure de cette bande et d'avertir l'usager lorsque la limite d'usure est atteinte.

Avantageusement, ce puits de mesure a une ouverture sur la surface de roulement dont la géométrie est de forme allongée et appropriée pour se fermer au moins partiellement lors du passage dans le contact avec la chaussée. Cette disposition est particulièrement avantageuse pour empêcher l'introduction dans le puits de mesure de corps étrangers tels des cailloux pendant le roulage.

Dans une autre variante de l'invention, le puits de mesure a une forme tronconique. Il est possible qu'en allant vers le fond du puits la forme conique s'élargisse ou bien se réduise afin de limiter encore la pénétration de corps étrangers dans le puits de mesure. Un avantage d'une forme tronconique est de faciliter la vision des deux parties de fond et ainsi confirmer la présence du témoin de limite d'usure.

Pour faciliter le repérage de chaque dispositif de suivi de l'usure, il est possible de pourvoir la bande de roulement avec des repères localisant chaque dispositif.

Le suivi de contrôle de l'usure d'une bande de roulement grâce au dispositif selon l'invention est aisé puisqu'après mesure des profondeurs respectives sur les deux parties de fond du puits du dispositif, l'écart de valeur indique clairement que l'on a affaire à un indicateur d'usure. Lorsque l'une des parties du fond d'un puits de mesure affleure la surface de roulement, il est alors nécessaire d'intervenir soit en changeant de pneu, soit en procédant au rechapage de ce pneu soit en procédant à une opération de creusage de nouvelles rainures pour retrouver une profondeur minimale de creux s'ouvrant sur la surface de roulement.

Dans l'optique de faire recreuser la bande de roulement, c'est-à-dire de recréer des nouvelles rainures, il est avantageux de prévoir sur la partie de fond du puits de mesure la plus proche de la surface de roulement à l'état neuf (donc la partie indiquant la limite d'usure), la présence d'un puits dit puits de recreusage dont la profondeur correspond à la profondeur maximale du recreusage.

Pour faciliter la localisation de chaque dispositif de l'invention sur la bande à l'état neuf, il est avantageux de prévoir qu'une surépaisseur soit formée sur la surface de roulement de la bande de roulement à l'état neuf et que dans cette surépaisseur s'ouvrent le puits de mesure du dispositif. Cette surépaisseur peut être de l'ordre de 0.5 à 1.5 mm.

Selon une autre variante et pour faciliter la localisation de chaque dispositif sur la bande à l'état neuf, il est intéressant de prévoir qu'une partie en dépression est formée sur la surface de roulement de la bande de roulement à l'état neuf et que dans cette partie en dépression s'ouvrent le puits de mesure du dispositif. Dans cette variante, et contrairement à la variante précédente comportant une surépaisseur, l'incidence sur le roulage est quasi nulle à l'état neuf.

Préférentiellement, chaque puits de mesure est orienté radialement c'est-à-dire de façon perpendiculaire à la surface de roulement à l'état neuf en direction de l'axe de rotation du pneu pourvu de la bande de roulement.

Dans une autre variante de l'invention, le puits de mesure s'ouvre à l'intérieur de la bande de roulement dans une cavité interne, cette cavité interne ayant un fond situé à une distance de la surface de roulement à l'état neuf de la bande de roulement égale à la profondeur maximale. Sur le fond de cette cavité interne est en outre moulé un relief dont la hauteur - mesurée par rapport au fond de la cavité interne - est telle que sa surface supérieure correspond au niveau de la limite d'usure légale. Avantageusement, le puits de mesure arrive sur la surface du relief et sur le fond de la cavité interne.

Avantageusement, le puits de mesure doit permettre au moins une vision de la surépaisseur sur au moins 50% de la section transversale dudit puits tout en conservant une plage de mesure de la profondeur maximale de creux.

Le dispositif selon l'invention peut être combiné avec un instrument de mesure approprié pour la mesure des deux profondeurs en une même opération. L'instrument de mesure comprend deux moyens de mesure distincts, un premier moyen mesurant à partir de la surface de roulement d'une bande de roulement une première profondeur correspondant à la limite en usure et un second moyen mesurant à partir de la surface de roulement d'une bande de roulement une seconde profondeur. Cet instrument de mesure comprend en outre des moyens d'affichage des première et seconde profondeurs.

Cet instrument de mesure peut être construit sur la base d'un profondimètre tel qu'employé de façon courante pour évaluer l'épaisseur de matière restant à user sur une bande de roulement de pneu. Un tel instrument comporte deux tiges mobiles et aptes à atteindre le fond du puits de mesure et à détecter les deux parties formant le fond dudit puits. Des moyens complètent le dispositif pour donner les profondeurs respectives des deux parties de fond.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en perspective d'une partie d'une bande de roulement selon l'invention ;
La figure 2 représente une vue en coupe selon un plan coupant la figure 1 selon la ligne II-II ;
La figure 3 montre une vue en coupe d'une variante de l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

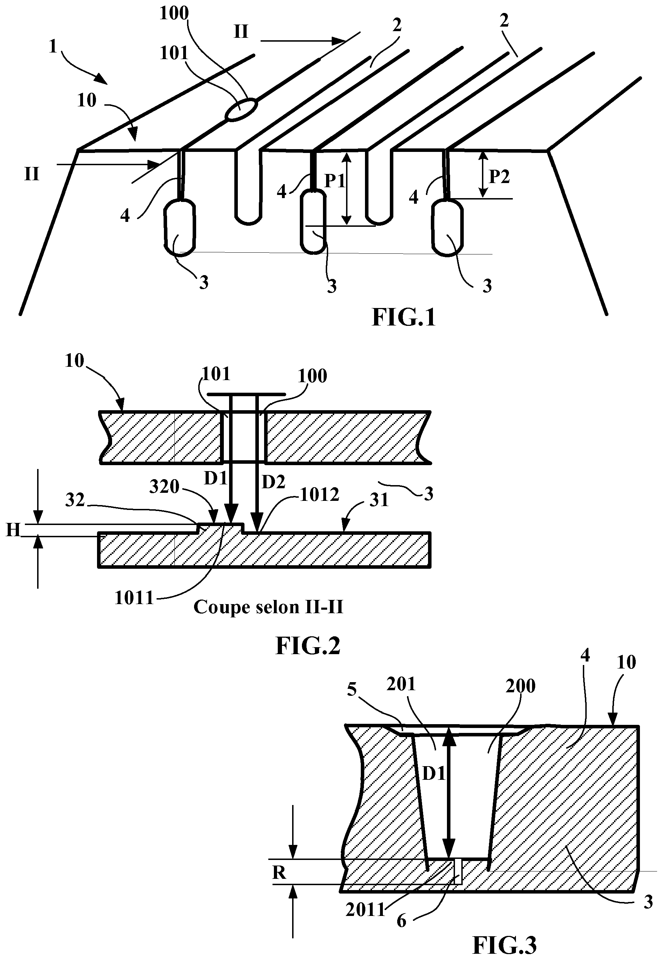

La bande de roulement 1 de pneu pour véhicule poids lourd montrée sur cette figure 1 comprend une surface de roulement 10 à l'état neuf sur laquelle s'ouvrent deux rainures 2 d'orientation générale circonférentielle. Ces deux rainures 2 ont une même profondeur P1.

En outre, cette bande de roulement 1 comprend trois cavités internes 3 d'orientation générale circonférentielle et destinées à s'ouvrir sur la surface de roulement après une usure prédéterminée de la bande. Ces trois cavités internes 3 sont prolongées vers la surface de roulement par des incisions 4. L'usure prédéterminée P2 à partir de laquelle se forment de nouvelles rainures est telle que ces nouvelles rainures sont formées avant que les deux rainures présentes à l'état neuf aient disparu (P2 est donc inférieur à P1). Une telle sculpture de bande de roulement associe à la fois un volume approprié de drainage de l'eau présente sur la chaussée notamment par temps de pluie et un niveau de rigidité approprié quel que soit l'état d'usure de la bande de roulement.

Sur cet exemple de bande de roulement, on a représenté une variante d'un dispositif indicateur de l'usure de la bande de roulement selon l'invention.

Un dispositif 100 est localisé de manière à être moulé au droit d'une cavité interne 3 et comprend un puits de mesure 101 s'ouvrant sur la surface de roulement 10 et s'étendant dans la profondeur de la bande de roulement. Ce premier dispositif 100 est disposé sur l'incision 4 prolongeant la cavité interne 3.

Le dispositif 100 indicateur de limite d'usure est montré en coupe à la figure 2, le plan de coupe étant repéré sur la figure 1 par son intersection sur la surface de roulement 10 par la ligne II-II. Sur cette figure 2, on voit la cavité interne 3 et s'ouvrant dans cette cavité interne 3 le puits de mesure 101 du dispositif indicateur de limite d'usure. La cavité interne 3 comprend des parois latérales reliées entre elles par un fond 31 sur lequel est moulé un relief formant une surépaisseur 32 de petites dimensions par rapport au fond de la cavité. Cette surépaisseur 32 occupe toute la largeur de la cavité 3 et présente une surface supérieure plane 320 décalée d'une hauteur H par rapport au fond 31 de la cavité interne 3. Cette hauteur H est égale au minimum de profondeur de rainure fixé par les législations des pays dans lesquels sont destinés à rouler les pneus.

Dans le cas présent, le puits de mesure 101 est dirigé depuis la surface de roulement 10 à l'état neuf vers la surépaisseur 32 de manière à permettre la vision à la fois d'une partie de la surface supérieure 320 de la surépaisseur 32 et d'une partie du fond 31 de la cavité 3. Cette dernière partie du fond constitue la deuxième partie du dispositif de suivi et contrôle de l'usure.

Le puits de mesure 101 présente donc un fond 1010 formé d'une première partie 1011 et d'une deuxième partie 1012, ces deux parties étant décalées l'une par rapport à l'autre dans la profondeur et dans la direction principale de la cavité 3, ces deux parties du fond étant situées à des distances différentes par rapport à la surface de roulement à l'état neuf, la première partie 1011 étant située à une distance D1 correspondant à la limite d'usure et la deuxième partie 1012 étant située à une distance D2 égale à la profondeur maximale des creux 3.

Le puits de mesure 101 a une forme cylindrique de section ovale, le plus grand axe de cette section étant aligné avec la direction circonférentielle de l'incision 4 sur la surface de roulement 10 (cette direction circonférentiel correspond à la direction principale de la cavité 3). La section transversale du puits de mesure 101 est appropriée pour perturber le moins possible le fonctionnement mécanique de contact de la bande de roulement avec la chaussée tout en permettant une vision de la limite d'usure. Un exemple de réalisation pour un pneu de poids lourd a montré de bons résultats en visibilité de la limite d'usure avec une section ovale ayant un petit axe égal à 6 mm et un grand axe égal à 8 mm.

De manière aisée, il est possible de s'assurer de l'écart de profondeur dans le puits de mesure en employant un instrument de mesure pourvu de deux moyens distincts pour effectuer simultanément la mesure des deux profondeurs dans le puits et cela quel que soit le niveau de l'usure de la bande de roulement. Les moyens distincts sont schématisés sur la figure 2 par les deux flèches partant d'un même niveau et mesurant des distances D1 et D2, la différence entre ces deux distances étant précisément égale à la limite d'usure H. Bien entendu, cet instrument de mesure comprend des moyens d'affichage des première et seconde profondeurs.

La figure 3 représente en coupe une variante de dispositif 200 indicateur de l'usure, celui-ci étant pourvu d'un moyen pour faciliter l'opération de recreusage après usure.

Sur cette figure 3, on voit qu'il est formé localement une dépression 5 sur la surface de roulement 10 à l'état neuf, cette dépression ayant une profondeur égale à 0.5 mm. À l'intérieur de cette dépression 5 s'ouvre un puits de mesure 201 du dispositif 200 indicateur de la limite d'usure. Ce puits de mesure 201 a une forme tronconique, sa section transversale s'agrandissant en allant vers la surface de roulement à l'état neuf.

Ce puits de mesure est moulé de manière à ce que son fond comporte une première partie 2011 en relief ou surépaisseur. La partie centrale 2011 est formée de manière à ce que sa surface externe soit plane et située à une distance H correspondant à la limite d'usure de la bande. Cette première partie 2011 est prolongée par une deuxième partie 2012 située à une distance de la surface de roulement 10 à l'état neuf qui est égale à la distance du fond de creux le plus à l'intérieur de la bande de roulement à l'état neuf.

Que ce soit dans la première variante ou la deuxième variante de l'invention, il est en outre possible de former, sur le fond destiné à la mesure de la limite d'usure de la bande de roulement à l'état neuf, un puits de recreusage destiné de manière usuelle à indiquer la profondeur maximale de recreusage de la bande de roulement. Cette opération de recreusage consistant, à l'aide d'outils appropriés, à former de nouvelles rainures par enlèvement de matière. La profondeur maximale d'enlèvement de matière correspondant à la profondeur maximale des puits de recreusage.

Dans la deuxième variante de puits de mesure 201, on a représenté un tel puits de recreusage 6, celui-ci s'ouvrant sur la surface externe plane de la partie centrale 2011 et ayant une profondeur R égale à l'épaisseur de matière à enlever pour former de nouvelles rainures.

Dans le cas de la présence d'une nervure sur le fond d'une cavité interne, ce redent étant destiné à empêcher les cailloux de venir agresser le fond de cette cavité interne après que cette dernière s'est ouverte sur la surface de roulement, il est judicieux que ce redent soit interrompu afin de permettre la formation d'une plateforme dont la hauteur par rapport au fond de la cavité correspond à la limite d'usure, cette plateforme occupant la largeur de la cavité et étant suivie d'une partie sans nervure dont la distance par rapport à à la surface de roulement est égale à la profondeur maximale de la cavité interne.

Bien entendu, l'invention n'est pas limitée aux exemples décrits et représentés et diverses modifications peuvent y être apportées sans sortir du cadre défini par les revendications.

## Revendications

1. Bande de roulement (1) comprenant un dispositif (100) de suivi de l'usure en roulage, cette bande de roulement (1) comprenant au moins une cavité interne (3) ayant une largeur et étant destinée à former une rainure ouverte sur une surface de roulement (10) après une usure partielle prédéfinie de la bande de roulement, cette bande de roulement (1) comprenant une limite d'usure correspondant à une épaisseur maximale de matière à user, cette bande de roulement comprenant en outre une profondeur maximale des creux plus grande que la limite d'usure afin de conserver un volume de drainage suffisant, ce dispositif (100) de suivi de l'usure formé dans la bande de roulement (1) étant **caractérisé en ce qu'**il comprend un puits de mesure (101) s'ouvrant en permanence, c'est-à-dire dès l'état neuf, sur la surface de roulement (10) de la bande de roulement (1), ce puits de mesure (101) ayant un fond formé d'une première partie (1011) et d'une deuxième partie (1012) décalées l'une par rapport à l'autre dans la profondeur et dans la direction principale de la cavité, la première partie (1011) présentant une largeur sensiblement égale à la largeur de la cavité et une surface supérieure plane située à une distance D1 de la surface de roulement égale à la limite d'usure, la deuxième partie (1012) occupant la largeur de la cavité et étant située à une distance D2 égale à la profondeur maximale des cavités internes (3).

2. Bande de roulement selon la revendication 1 **caractérisée en ce que** le puits de mesure (101) a une ouverture sur la surface de roulement dont la géométrie est de forme allongée et appropriée pour se fermer au moins partiellement lors du passage dans le contact avec la chaussée.

3. Bande de roulement selon la revendication 1 ou la revendication 2 **caractérisée en ce que** le puits de mesure a une forme tronconique.

4. Bande de roulement selon l'une des revendications 1 à 3 **caractérisée en ce que**, pour faciliter la localisation de chaque dispositif de l'invention sur la bande à l'état neuf, le puits de mesure du dispositif est formé dans une surépaisseur moulée sur la surface de roulement de la bande de roulement à l'état neuf.

5. Bande de roulement selon l'une des revendications 1 à 3 **caractérisée en ce que** le puits de mesure du dispositif est formé dans une dépression (5) moulée sur la surface de roulement de la bande de roulement à l'état neuf.

6. Bande de roulement selon l'une des revendications 1 à 5 **caractérisée en ce que** le puits de mesure du dispositif est orienté radialement c'est-à-dire en direction de l'axe de rotation du pneu.

7. Bande de roulement selon l'une des revendications 1 à 6 **caractérisée en ce que** la partie de fond du puits de mesure la plus proche de la surface de roulement à l'état neuf est pourvue d'un puits (6), dit puits de recreusage, dont la profondeur correspond à la profondeur maximale du recreusage.

## Patentansprüche

1. Lauffläche (1), umfassend eine Vorrichtung (100) zur Überwachung der Reifenabnutzung, wobei diese Lauffläche (1) mindestens einen inneren Hohlraum (3) umfasst, der eine Breite aufweist und dazu bestimmt ist, eine offene Rille auf einer Laufoberfläche (10) nach einer vordefinierten teilweisen Abnutzung der Lauffläche zu bilden, wobei diese Lauffläche (1) eine Abnutzungsgrenze umfasst, die einer maximalen Dicke des abzunutzenden Materials entspricht, wobei diese Lauffläche außerdem eine maximale Tiefe der Vertiefungen umfasst, die größer ist als die Abnutzungsgrenze, um ein ausreichendes Drainagevolumen aufrechtzuerhalten, wobei diese Abnutzungsüberwachungsvorrichtung (100), die in der Lauffläche (1) gebildet ist, **dadurch gekennzeichnet ist, dass** sie eine Messsenke (101) umfasst, die permanent geöffnet ist, das heißt, ab dem Neuzustand, auf der Laufoberfläche (10) der Lauffläche (1), wobei diese Messsenke (101) einen Boden aufweist, der aus einem ersten Teil (1011) und aus einem zweiten Teil (1012) gebildet ist, die in der Tiefe und in der Hauptrichtung des Hohlraums voneinander versetzt sind, wobei der erste Teil (1011) eine Breite im Wesentlichen gleich der Breite des Hohlraums und eine ebene obere Fläche, die in einer Distanz D1 von der Laufoberfläche gleich der Abnutzungsgrenze angeordnet ist, aufweist, und wobei der zweite Teil (1012) die Breite des Hohlraums einnimmt und in einer Distanz D2 gleich der maximalen Tiefe der inneren Hohlräume (3) angeordnet ist.

2. Lauffläche nach Anspruch 1, **dadurch gekennzeichnet, dass** die Messsenke (101) eine Öffnung auf der Laufoberfläche hat, deren Geometrie eine längliche Form aufweist und geeignet ist, sich mindestens teilweise zu schließen, wenn sie mit der Fahrbahn in Kontakt gelangt.

3. Lauffläche nach Anspruch 1 oder Anspruch 2, **dadurch gekennzeichnet, dass** die Messsenke eine Kegelstumpfform hat.

4. Lauffläche nach einem der Ansprüche 1 bis 3, **dadurch gekennzeichnet, dass**, um die Lokalisierung jeder Vorrichtung der Erfindung auf der Lauffläche im Neuzustand zu erleichtern, die Messsenke der Vorrichtung in einer geformten Verdickung auf der Laufoberfläche der Lauffläche im Neuzustand gebildet wird.

5. Lauffläche nach einem der Ansprüche 1 bis 3, **dadurch gekennzeichnet, dass** die Messsenke der Vorrichtung in einer geformten Mulde (5) auf der Laufoberfläche der Lauffläche im Neuzustand gebildet wird.

6. Lauffläche nach einem der Ansprüche 1 bis 5, **dadurch gekennzeichnet, dass** die Messsenke der Vorrichtung radial ausgerichtet ist, das heißt, in der Richtung der Drehachse des Reifens.

7. Lauffläche nach einem der Ansprüche 1 bis 6, **dadurch gekennzeichnet, dass** der Teil des Bodens der Messsenke, welcher der Laufoberfläche am nächsten liegt, im Neuzustand mit einer Senke (6), die als Wiedereinschneidesenke bezeichnet wird, versehen ist, deren Tiefe der maximalen Wiedereinschneidetiefe entspricht.

## Claims

1. Tread (1) comprising a device (100) for monitoring the tread wear during running, this tread (1) comprising at least one internal cavity (3) having a width and being intended to form a groove open on to a tread surface (10) after predefined partial wearing of the tread, this tread (1) comprising a wear limit corresponding to a maximum thickness of wearable material, this tread further comprising a maximum void depth that is greater than the wear limit so as to maintain a sufficient drainage volume, this wear monitoring device (100) formed in the tread (1) being **characterized in that** it comprises a measurement well (101) opening permanently, which means to say from new, on to the tread surface (10) of the tread (1), this measurement well (101) having a bottom formed of a first part (1011) and of a second part (1012) which are offset from one another in the depth and in the main direction of the cavity, the first part (1011) having a width substantially equal to the width of the cavity and a planar top surface situated at a distance D1 away from the tread surface equal to the wear limit, the second part (1012) occupying the width of the cavity and being situated at a distance D2 equal to the maximum depth of the internal cavities (3).

2. Tread (1) according to Claim 1, **characterized in that** the measurement well (101) has an opening on to the tread surface of which the geometry is of elongate shape and suited to closing up at least in part when it comes into contact with the roadway.

3. Tread (1) according to Claim 1 or Claim 2, **characterized in that** the measurement well has a frustoconical shape.

4. Tread (1) according to one of Claims 1 to 3, **characterized in that**, to make it easier to locate each device of the invention on the tread when new, the measurement well of the device is formed in an additional thickness moulded on the tread surface of the tread when new.

5. Tread (1) according to one of Claims 1 to 3, **characterized in that** the measurement well of the device is formed in a depression (5) moulded on the tread surface of the tread when new.

6. Tread (1) according to one of Claims 1 to 5, **characterized in that** the measurement well of the device is oriented radially, namely in the direction of the axis of rotation of the tyre.

7. Tread (1) according to one of Claims 1 to 6, **characterized in that** the part of the bottom of the measurement well that is closest to the tread surface when new is provided with a well (6), referred to as the regrooving well, the depth of which corresponds to the maximum depth of the regrooving.
